# EUROPÄISCHE PATENTSCHRIFT

(11) **EP 0 448 506 B1**
(45) Veröffentlichungstag und Bekanntmachung des Hinweises auf die Patenterteilung: **10.08.1994**
(21) Anmeldenummer: 91810067.8
(22) Anmeldetag: 29.01.1991
(51) Int. Cl.: G01B 3/06, G01B 3/00

(54) **Gliedermasstab**
Folding ruler
Mètre pliant

(30) Priorität: 29.01.1990 CH 268/90
(43) Veröffentlichungstag der Anmeldung: 25.09.1991
(73) Patentinhaber: Etablissement SINOVAL, FL-9490 Vaduz (LI)
(72) Erfinder: Walser, Werner, CH-9470 Buchs (CH)
(74) Vertreter: Kulhavy, Sava, Dipl.-Ing.

(56) Entgegenhaltungen:
- CH-A- 186 307
- DE-C- 852 154
- FR-A- 2 517 425
- US-A- 2 555 741

## Beschreibung

Die vorliegende Erfindung betrifft einen Gliedermasstab, mit hintereinander gekoppelten Klappschenkeln, mit einer ersten Skala, welche auf einer Seite der Klappschenkel ausgeführt ist und einen Satz von an einer der Masstabkanten angrenzenden Strichen sowie einen Satz von diesen Strichen zugeordneten Symbolen umfasst, mit einer zweiten Skala, welche einen Satz von diesen Strichen zugeordneten Symbolen umfasst, mit einer zweiten Skala, welche einen Satz von an der gegenüberliegenden Masstabkante angrenzenden Striche sowie einen Satz von diesen Strichen zugeordneten Symbolen umfasst, und mit Zentimeterstric hen sowie Millimeterstrichen, aus welchen die jeweilige Teilung der Skalen zusammengesetzt ist, wobei die Millimeterstriche kürzer sind als die Zentimeterstriche.

Ein herkömmlicher Gleidermasstab weist zwei Skalen auf, wobei je eine dieser Skalen sich über die gesamte Länge einer der breiten Seiten des Masstabes erstreckt. Die jeweilige Skala weist zwei Sätze von Strichen auf, wobei jeder dieser Strichsätze eine Teilung darstellt. Je eine dieser Teilungen ist einer der Längskanten der betreffenden breiten Seite des Gliedermasstabes zugeordnet. Jede Teilung umfasst unter anderem Zentimeterstriche und Millimeterstriche, wobei die Millimeterstriche kürzer sind als die Zentimeterstriche. Striche der Teilungen in einer der Skalen, welche denselben Abstand vom Nullpunkt des Masstabes aufweisen, liegen sich einander gegenüber.

Die jeweilige Skala umfasst ferner eine Reihe von Symbolen, bzw. Zahlen, welche sich zwischen den Strichen der Teilungen dieser Skala befinden. Zwischen zwei Strichen der Teilungen befindet sich jeweils eine Zahl. Diese Zahlen geben den Abstand der jeweiligen Stelle am Gliedermasstab vom Nullpunkt dieser Skala an. Die Zahlen sind den Zentimeterstrichen zugeordnet und sie liegen zwischen zwei sich einander gegenüberliegenden Zentimeterstrichen.

Man ist gewohnt, dass eine Skala von links nach rechts abgelesen wird, d.h. dass die jeweils sichtbare Skala von links nach rechts aufsteigend ist und dass sich der Nullpunkt der Skala somit immer an der linken Seite befindet. Ferner ist man gewohnt, dass die Zahlen dabei aufrecht stehen. Es liegt in der Natur der Symbole bzw. Zahlen, dass sie nur dann ohne weiteres lesbar sind, wenn der Kopf der Zahl bzw. Ziffern oben und der Fuss derselben unten liegt. Folglich müssen die Zahlen immer aufrechtstehen, und zwar unabhängig davon, welches Ende des Gliedermasstabes sich an der linken Seite befindet bzw. welche Seite des Gliedermasstabes gerade ersichtlich ist.

Eine der Folgen der genannten Forderung ist, dass die Zahlenreihen der Skalen, die sich an den gegenüberliegenden breiten Flächen des Masstabes befinden, gegenläufig sind. Dies bedeutet, dass der Nullpunkt einer der Skalen an einem Ende des Masstabes und der Nullpunkt der anderen Skala am anderen Ende des Masstabes liegt. Wenn man einen solchen Gliedermasstab zunächst in der normalen Ablesestellung hat und wenn man diesen Masstab dann entlang seiner Längsachse wendet, dann sind die Zahlen der Skala, die jetzt sichtbar ist, "auf dem Kopf stehend". Dies deswegen, weil der Nullpunkt dieser zweiten Skala rechts liegt. Folglich ist es jetzt nicht ohne weiteres möglich, die betreffende Länge bei dieser Stellung des Gliedermasstabes abzulesen.

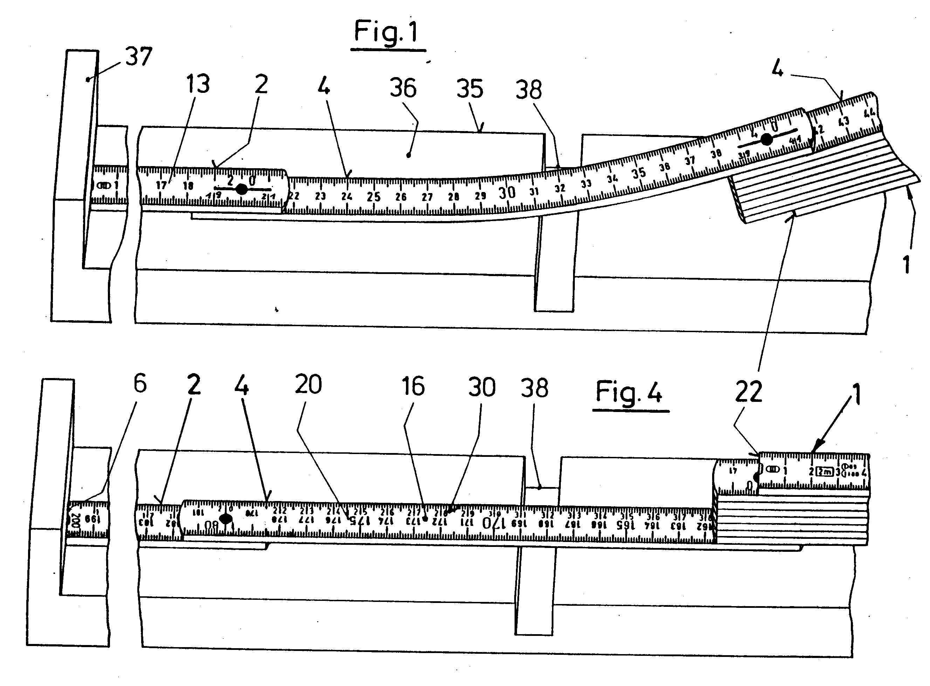

Fig. 1 zeigt eine Situation, welche in der Praxis oft vorkommt, wenn man den herkömmlichen Gliedermasstab zur Messung von Längen anwendet. Dieser Gliedermasstab weist Klappschenkel 2 und 4 sowie Symbole 13 auf, welche auf den Klappschenkeln 2 und 4 angebracht sind und welche die einzelnen Längen am Gliedermasstab bezeichnen. In Fig. 1 ist ein Endabschnitt eines Gegenstandes 35 dargestellt, welcher einen langen Grundkörper 36 aufweist. An einem Ende dieses Grundkörpers 36 ist eine rechtwinklig dazu stehende Lasche 37 angeordnet. In einem Abstand von 31cm von dieser Lasche 37 soll eine Nut 38 im Grundkörper 36 senkrecht zur Längsachse dieses ausgeführt werden. Das Problem besteht in einem solchen Fall darin, die Strecke von 31cm möglichst genau festzulegen.

Zur Abmessung der genannten Strecke werden die zwei ersten Klappschenkel 2 und 4 des Gliedermasstabes verwendet. Damit man die genannte Strecke mit Hilfe des bekannten Masstabes möglichst genau abmessen kann, muss man den zweiten Klappschenkel 4 stark nach unten verbiegen, wie dies in Fig. 1 angedeutet ist. Dies ist eine mühsame Angelegenheit und auch wenn man den Schenkel 4 wirklich stark verbiegt, dann gelingt es doch nicht, den der Länge von 31cm entsprechenden Teilungsstrich bei der Zahl 31 bis auf die Oberfläche des Grundkörpers 36 hinunterzudrücken. Dies deswegen, weil die Höhe des Paketes 1, welches durch die übrigen und zusammengefalteten Klappschenkel 4 dieses Gliedermasstabes gebildet ist, verhältnismässig gross ist und weil das Material der Schenkel 2, 4 usw. verhältnismässig steif ist.

Man könnte den Gliedermasstab entlang seiner Längsachse wenden und mit der in Fig. 1 dargestellten Oberseite auf den Gegenstand 36 legen. Da die Skalen an den einander gegenüberliegenden Seiten des Gliedermasstabes gegenläufig sind, erscheint nach der genannten Wendung des Gliedermasstabes der Endabschnitt der anderen Skala, welcher die Ziffern bis 200cm umfasst. Zudem noch stehen diese Ziffern dieser Skala "auf dem Kopf".

Damit man jetzt die Strecke von 31cm abmessen kann, müsste man zunächst 31cm von 200cm subtrahieren, eine entsprechende Ziffer auf der jetzt ersichtlichen Skala ermitteln und erst dann die gewünschte Strecke markieren. Man kann und man darf nicht erwarten und verlangen, dass jeder Benützer eines solchen Masstabes rasch und fehlerfrei subtrahieren kann. Zudem muss man bedenken, dass Arbeiten, bei welchen Gliedermasstäbe angewendet werden, oft in Akkord durchgeführt werden, sodass Zeitverluste jeglicher Art zu vermeiden sind. Diese Zeitverluste können sich wegen der genannten rechnerischen Operationen und/oder wegen Fehlern bei der Berechnung und Abmessung von vorgegebenen Strecken ergeben, wenn diese Fehler ausgebessert werden müssen. Manchmal verursachen solche Fehler zudem noch beträchtliche Kosten, welche durch die Beschaffung neues Materials entstehen, wenn sich der Fehler am vorhandenen Material nicht beseitigen lässt.

Es ist ein Gliedermasstab aus FR-A-2 517 425 bekannt, bei dem je eine Skala auf einer der Seiten desselben aufgetragen ist, wobei diese zwei Skalen zueinander gegenläufig sind. Die jeweilige Skala umfasst zwei Strichteilungen, von welchen je eine einem der Längsränder der betreffenden Seite des Gliedermasstabes zugeordnet ist. Den Zentimeterstrichen in der jeweiligen Strichteilung ist jeweils ein Symbol bzw. eine Zahl zugeordnet. Diese Skala weist somit zwei Reihen von Zahlen auf, von welchen je eine einer der Teilungen zugeordnet ist. Diese Zahlenreihen geben den Abstand des jeweiligen Zentimeterstriches vom Nullpunkt dieser Skala an. Der Nullpunkt der beiden Zahlenreihen liegt an einem Ende des Gliedermasstabes. Den Zentimeterstrichen der jeweiligen Teilung dieser Skala, welche sich in demselben Abstand vom Nullpunkt dieser Skala befinden, ist somit je ein Paar von gleichen Zahlen zugeordnet, wobei das jeweilige Zahlenpaar sich zwischen einander gegenüberliegenden Zentimeterstrichen befindet. Die Zahlen im jeweiligen Paar stehen spiegelbildlich zueinander.

Ausserdem ist der erste Klappschenkel dieses Masstabes mit einer Zunge versehen, welche aus der freien Endpartie dieses Klappschenkels ausfahrbar ist. Diese Zunge weist ebenfalls Skalen auf. Die Messung mit Hilfe dieser Zunge erfolgt in der Weise, dass man das Mass des Herausfahrens der Zunge aus dem Klappschenkel an den Skalen des Klappschenkels ermittelt. Während der Verwendung dieses vorbekannten Masstabes kann sich die Zunge links oder rechts am Masstab befinden. Damit man in diesen beiden Fällen den erhaltenen Wert möglichst leicht ablesen kann, sind die Symbole des jeweiligen Paares spiegelbildlich zueinander angeordnet, sodass aufrechtstehende Zahlen immer sichtbar sind, und zwar unabhängig davon, ob sich die Messzunge bei der Messung links oder rechts befindet. Es dürfte einleuchten, dass die Ausbildung dieses vorbekannten Masstabes die Lösung des vorstehend genannten Problems nicht herbeiführen kann.

Wenn man zudem noch bedenkt, dass die Zentimeterstriche dieses vorbekannten Masstabes eine bestimmte Länge aufweisen müssen, damit sie sich von den Millimeterstrichen deutlich unterscheiden lassen, dass die Zahlen der Zahlenreihen eine minimale Grösse aufweisen und sich in einem ausreichenden Abstand voneinander befinden müssen, dann ergibt dies eine bestimmte und minimale Breite der Klappschenkel dieses vorbekannten Masstabes. Die Fachwelt ist jedoch auf eine ganz bestimmte Breite der Klappschenkel bei Gliedermasstäben gewohnt und eingerichtet, welche durch zwei Teilungen und bloss eine Zahlenreihe gegeben ist. Ein Gliedermasstab mit der Breite des Masstabes gemäss der genannten französichen Patentschrift könnte somit auch aus diesem zur Lösung des genannten Problems nichts beitragen.

In CH-A-186307 ist ein zusammenlegbarer Metermasstab offenbart, durch welchen es ermöglicht werden soll, zum Beispiel schwer zugängliche Innenmasse durch ein einziges Abmessen zu erfassen. Das Endglied dieses vorbekannten Meterstabes und nur dieses Endglied weist zu diesem Zweck zwei Teilungen auf, von welchen je eine einem der Längsränder der Vorderseite dieses End-Klappschenkels zugeordnet ist. Jene Zahlenreihe des Gliedermasstabes, welche sich über die ganze Länge desselben erstreckt, ist einer der Teilungen zugeordnet. Das Endglied dieses vorbekannten Meterstabes ist mit einem in Längsrichtung verschiebbaren Schieber versehen. Um das Mass des Herausfahrens des Schiebers aus dem Endglied feststellen zu können, ist dieses Endglied mit einer zusätzlichen Zahlenreihe versehen. Diese Hilfsreihe von Zahlen ist der anderen Teilung auf der Vorderseite des Gliedermasstabes zugeordnet. Die Zahlen in den beiden Zahlenreihe sind gleich orientiert, d.h. die Zahlen der beiden Reihen stehen aufrecht.

Zur Lösung des hier einleitend genannten Problems ist dieser vorbekannte Gliedermasstab gänzlich ungeeignet. Die gegenläufige Zahlenreihe am End-Klappschenkel ist zur Abmessung von Längen an unter dem Masstab liegenden Gegenständen überhaupt nicht verwendar, weil der Nullpunkt dieser Zahlenreihe am inneren Ende des Klappschenkels liegt. Ferner, wenn man diesen Endklappschenkel wenden würde, dann würde bloss die Rückseite des Schiebers zum Vorschein kommen, welche kaum für Messungen ausgeführt ist. Ausserdem würden die Ziffern der beiden Zahlenreihen auf der Vorderseite des Endklappschenkels "auf dem Kopf stehen".

Die Aufgabe der vorliegenden Erfindung ist, einen Gliedermasstab anzugeben, bei welchem die genannten und noch weitere Nachteile nicht vorkommen.

Diese Aufgabe wird beim Gliedermasstab der eingangs genannten Gattung erfindungsgemäss so gelöst, wie dies im Anspruch 1 definiert ist.

Nachstehend werden Ausführungsformen der vorliegenden Erfindung anhand der beiliegenden Zeichnung näher erläutert. Es zeigt:
Fig. 1 perspektivisch die Abmessung einer Strecke auf einem Gegenstand mit Hilfe eines Gliedermasstabes gemäss dem Stand der Technik,
Fig. 2 in Draufsicht eine erste Ausführung des vorliegenden Gliedermasstabes, welcher auf einem zu vermessenden Gegenstand angelegt ist,
Fig. 3 in Draufsicht einen Ausschnitt aus einer weiteren Ausführung des vorliegenden Masstabes, bei dem sich die Symbole der Zusatzskala unterhalb der Symbole der Hauptskala befinden und
Fig. 4 perspektivisch die Abmessung einer Strecke auf dem Gegenstand gemäss Fig. 1 mit Hilfe des vorliegenden Gliedermasstabes.

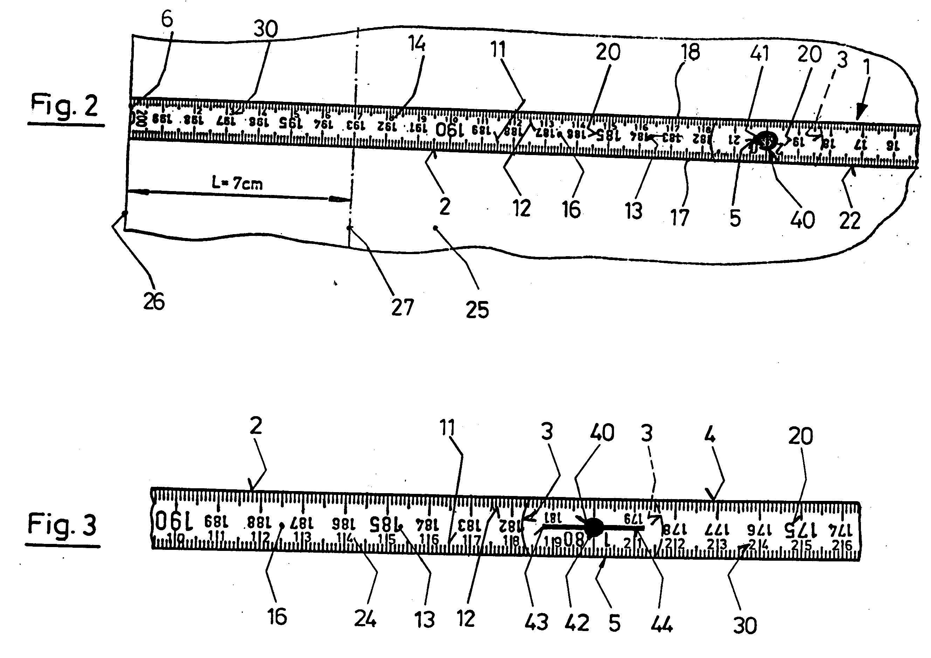

Fig. 2 der beiliegenden Zeichnungen zeigt in Draufsicht eine erste Ausführung des vorliegenden Gliedermasstabes. Dieser Gliedermasstab weist einen Grundkörper 1 (Fig. 1) auf, welcher untereinander gekoppelte Klappschenkel 2, 4 und 22 (Fig. 1) enthält. Diese Klappschenkel des Gliedermasstabes sind als Streifen aus einem steifen Material, wie z.B. aus Holz, Kunststoff oder ähnlich ausgeführt. Im zusammengefalteten bzw. zusammengelegten Zustand bilden die Klappschenkel ein Paket 1, in dem die Schenkel 2, 4 bzw. 22 auf- bzw. übereinander liegen. Bei der Darstellung nach Fig. 2 ist der im Paket zuunterst liegende Klappschenkel 2 vom Paket 1 weggeklappt und mit dem übrigen Teil des Paketes 1 in Ausrichtung gebracht worden. Dieser Klappschenkel 2 ragt somit vom Paket 1 seitlich weg.

Die in Fig. 2 rechts liegende Endpartie 3 des genannten Klappschenkels 2 liegt unter der Endpartie 3 eines weiteren Klappschenkels 4 und diese Klappschenkel 2 und 4 sind im Bereich deren Endpartien 3 mit Hilfe eines Gelenkes 5 miteinander schwenkbar gekoppelt. Der weitere bzw. zweite Klappschenkel 4 kann auch als einer der Mittel-Klappschenkel bezeichnet werden, weil er beiderends mit Hilfe von Gelenken 5 mit benachbarten Klappschenkeln gekoppelt ist. Der erstgenannte Klappschenkel 2 kann auch als End-Klappschenkel bezeichnet werden, weil er sich am Ende einer Kette 1 aus Klappschenkeln befindet. Die freie Endpartie des End-Klappschenkels 2 ist mit einer Stirnkante 6 abgeschlossen.

Der letzte Mittel-Klappschenkel 4 am anderen Ende der Schenkelkette 1 ist mit dem zweiten End-Klappschenkel 22 dieser Schenkelkette 1 ebenfalls mit Hilfe des Gelenkes 5 schwenkbar gekoppelt. Dieser zweite End-Klappschenkel 22 ist in Fig. 2 zuoberst auf dem Paket 1 dargestellt. Die Mittel-Klappschenkel 4 dieses Paketes 1 liegen somit zwischen den zwei Endklappschenkeln 2 und 22, wenn der Gliedermasstab zusammengefaltet ist.

Der jeweilige Klappschenkel 2, 4 bzw. 22 weist zwei flächenhafte Seiten 16 auf, zwischen welchen sich Schmalseiten 17 und 18 des jeweiligen Klappschenkels 2, 4 bzw. 22 befinden. Je eine erste Skala 20 erstreckt sich über die ganze Länge der jeweiligen Breitseite 16 der Schenkelkette 1, d.h. über die aufeinander folgende Klappschenkel 2, 4 und 22. Diese Skalen 20 können auch als Hauptskalen bezeichnet werden und sie erstrecken sich von einem Ende der Schenkelkette 1 bis zum anderen Ende derselben. Wenn der Gliedermasstab ein Metermasstab ist, dann sind diese Skalen 20 Meterskalen.

Die Hauptskalen 20 auf den zueinander gegenüberliegenden Breitseiten 16 der Schenkelkette 1 sind derart ausgeführt, dass sie zueinander in entgegengesetzten Richtungen verlaufen. Die Nullmarke der in Fig. 2 ersichtlichen Hauptskala 20 befindet sich rechts und sie ist in Fig. 2 nicht dargestellt. Die Nullmarke der anderen und in Fig. 2 unsichtbaren Hauptskala 20 befindet sich links und sie fällt mit einer in Fig. 2 links liegenden Stirnkante 6 des ersten End-Klappschenkels 2 zusammen. Die Endmarke der in Fig. 2 sichtbaren Hauptskala 20 fällt mit der Endkante 6 zusammen.

Die Hauptskala 20 umfast eine Reihe bzw. einen Satz von Teilungsstrichen 12 sowie eine Reihe diesen zugeordneter Symbole 13. Diese Symbole 13 sind den einzelnen Positionen am Strichsatz 12 zugeordnet und sie sind bei einem Metermass Ziffern. Der entsprechende Abschnitt des Strichsatzes 12 ist auf einer der Seiten 16 des jeweiligen Klappschenkels 2, 4 und 22 ausgetragen und der jeweilige Strichsatz 12 ist in jenem Bereich der jeweiligen Klappschenkelseite 16 angeordnet, welcher an einer der Seitenkanten 17 bzw. 18 des bzw. der Klappschenkel 2, 4 und 22 angrenzt. Der jeweilige Strichsatz 12 ist den Fusspartien der Symbole 13 der jeweiligen Hauptskala 20 zugeordnet. Damit die Ablesung der Messwerte bequem und rasch vor sich gehen kann, sind die Symbole 13 derart orientiert, dass sie bei der vorwärts laufenden Skala, bei welcher sich die Nullmarke 6 am rechten Ende des Gliedermasstabes befindet, aufrecht stehen.

Die die Hauptskala 20 tragende Seite bzw. Oberfläche 16 der Klappschenkel 2, 4 und 22 ist mit zumindest einer Zusatzskala 30 versehen, welche zur Hauptskala 20 gegenläufig ist. Die Unterteilungen der Zusatzskala 30 ist der Unterteilung der gegenläufigen Hauptskala 20 gleich, während die Richtung bzw. der Sinn der Zusatzskala 30 zur Richtung bzw. zum Sinn der Hauptskala 20 entgegengesetzt ist.

In Fig. 2 ist unter anderem die Innenseite 16 des erst genannten End-Klappschenkels 2 sichtbar, welche mit der Zusatzskala 30 versehen ist. An die rechts liegende Endpartie 3 des End-Schenkels 2 schliesst sich in Fig. 2 das Schenkelpaket in der vorstehend genannten Weise an. Ein so orientiertes und angeordnetes Paket stört bei der Messung daher nicht (Fig. 4). Der im Paket zuoberst liegende und in Fig. 1 daher sichtbare Klappschenkel ist der zweite und vorstehend bereits erwähnte End-Klappschenkel 22 des Paketes bzw. Masstabkörpers 1.

Die Nullmarke der Zusatzskala 30 fällt vorteilhaft mit der Endmarke 6 der gegenläufigen Hauptskala 20 zusammen, welche sich auf derselben Seite 16 des Masstabes wie die Zusatzskala 30 befindet. Die Zusatzskala 30 ist mit der sich an der gegenüberliegenden Seite 15 (Fig. 1) des Masstabkörpers 1 ausgeführten Vorwärts-Hauptskala 20 somit gleichlaufend.

Die Zusatzskala 30 erstreckt sich von der genannten End- bzw. Nullmarke 6 zumindest über einen Teil des End-Klappschenkels 2 bzw. 22. Vorteilhaft erstreckt sie sich zumindest über die freie Endpartie des End-Klappschenkels 2 bzw. 22. Die Zusatzskala 30 kann sich jedoch auch über den ganzen End-Klappschenkel 2 bzw. 22 erstrecken, wobei sie dann weiter auch auf den an den End-Klappschenkel 2 bzw. 22 unmittelbar angeschlossenen Mittel-Klappschenkel 4 ausgedehnt werden kann. Die Zusatzskala 30 kann sich jedoch auch über die gesamte Länge des Gliedermasstabes erstrecken. Jeder der Klappschenkel 2, 4 bzw. 22 trägt dabei einen Abschnitt der Zusatzskala 30.

Auf jeder Seite des Masstabkörpers 1 ist eine Zusatzskala angeordnet, welche so ausgeführt ist, wie dies hier beschrieben ist. Dies bedeutet, dass eine zweite Zusatzskala auch auf der in Fig. 2 nicht sichtbaren flächenhaften Seite des Masstabkörpers 1 angeordnet ist. Die Nullmarke dieser zweiten Zusatzskala fällt mit der Stirnkante des zweiten End-Klappschenkels 22 zusammen. Diese zweite Zusatzskala ist der Hauptskala auf dieser Seite des Masstabkörpers zugeordnet und sie verläuft in Bezug auf diese in entgegengesetzter Richtung, d.h. von rechts nach links. Die Symbole der zweiten Zusatzskala sind zu den Symbolen der Hauptskala spiegelbildlich angeordnet.

Die Zusatzskala 30 weist zumindest einen Satz von Teilungsstrichen 11 sowie die den einzelnen Positionen dieser Teilungsstriche 11 zugeordneten Symbole 14 auf. Diese Symbole 14 bestehen bei einem Metermasstab aus Ziffern. Die Symbole 14 sind so ausgeführt, dass sie dem Betrachter als aufrechtstehend erscheinen, wenn die Nullmarke der Zusatzskala 30 während der Messung links vom Betrachter liegt und im dargestellten Beispiel mit der Stirnkante 6 des ersten End-Klappschenkels 2 zusammenfällt.

Die Teilungsstriche 11 bzw. 12 der Hauptskala 20 können zugleich auch die Teilungsstriche der Zusatzskala 30 sein. Der bereits genannte Abstand zwischen den Symbolen 13 der Hauptskala 20 und der Reihe 11 bzw. 12 der Teilungsstriche kann zur Anordnung der Symbole 14 der Zusatzskala 30 ausgenützt werden. Dies ist deswegen möglich, weil die Symbole 14 der Zusatzskala 30 sich wegen der gleichen Teilung bei der Zusatzskala 30 und bei der Hauptskala 20 an derselben Stelle des Masstabes befinden.

Der jeweilige Satz 11 bzw. 12 von Teilungsstrichen umfasst Zentimeterstriche, Millimeterstriche sowie Teilungsstriche, welche den Abstand von 5mm vom jeweiligen Zentimeterstrich markieren. Die Zentimeterstriche sind die Längsten bzw. höchsten Striche der jeweiligen Teilung 11 bzw. 12. Die Millimeterstriche sind die kürzesten Striche der Teilung. Die mittigen Striche, entsprechend dem Abstand von Smm, weisen eine Länge auf, welche zwischen der Länge der Zentimeter- und Millimeterstriche liegt. Die Millimeterstriche sind somit kürzer als die Zentimeterstriche.

Die Symbole der ersten Skala 20 und der zweiten Skala 30 sind den Zentimeterstrichen zugeordnet. Die Symbole der ersten Skala 20 können zwischen den sich gegenüberliegenden Zentimeterstrichen der beiden Strichsätze 11 bzw. 12 angeordnet sein. Diese Symbole befinden sich in einem Abstand von den inneren Enden der Zentimeterstriche. Die Symbole der zweiten Skala 30 sind jenem Abschnitt der Zentimeterstriche seitlich zugeordnet, welcher die Millimeterstriche überragt. In solchen Fällen können die Hauptachsen der Symbole der ersten Skala 20 und der zweiten Skala 30 praktisch rechtwinklig zur Längsachse des Klappschenkels stehen. Der überragende Abschnitt des Zentimeterstriches befindet sich wenigstens teilweise zwischen zwei benachbarten Stellen eines Symbols der zweiten Skala 30, wenn das Symbol zumindest zweistellig ist. Der überragende Abschnitt des Zentimeterstriches befindet sich wenigstens teilweise neben dem betreffenden Symbol der zweiten Skala 30, wenn das Symbol einstellig ist. Die Symbole 13 befinden sich zwischen den Sätzen 11 und 12 der Teilungsstriche der jeweiligen Hauptskala 20 und sie sind in einem Abstand von diesen Teilungsstrich-Sätzen angeordnet.

In Fig. 2 ist eine Zusatzskala 30 dargestellt, welche nur einen Satz bzw. eine Reihe von Symbolen 14 aufweist. Diese Symbole 14 befinden sich über den Fusspartien der Symbole 13 der Hauptskala 20. Dies bedeutet, dass die genannten Symbole 14 der Zusatzskala 30 sich zwischen den Fusspartien der Symbole 13 der Hauptskala 20 und dem darüber liegenden Satz 12 von Teilungsstrichen befinden.

In Fig. 3 ist eine weitere Ausführungsmöglichkeit des vorliegenden Gliedermasstabes gezeigt, bei welchem die Zusatzskala 30 ebenfalls nur eine Reihe bzw. einen einzigen Satz von Symbolen 24 aufweist. Diese Symbole 24 der Zusatzskala 30 befinden sich unterhalb der Köpfe der Symbole 13 der Hauptskala 20. Dies bedeutet, dass die genannten Symbole 24 der Zusatzskala 30 sich zwischen den Kopfpartien der Symbole 13 der Hauptskala 20 und dem darunter liegenden Satz 11 von Teilungsstrichen befinden. Aus dem Vorstehenden geht hervor, dass die Symbole 24 dieser Zusatzskala 30 in bezug auf die Symbole 13 der Hauptskala 20 spiegelbildlich angeordnet sind. Es versteht sich, dass die Zusatzskala 30 zugleich die beiden Sätze 14 und 24 der Symbole aufweisen kann. Diese Symbolensätze 14 und 24 können dann so angeordnet sein, wie dies in Fig. 2 und 3 dargestellt ist. Sie können allerdings in unterschiedlicher Weise ausgeführt sein, so dass sie sich voneinander optisch unterscheiden lassen. Die Symbole 13 der Hauptskala 20 oder/und die Symbole 14 bzw. 24 der Zusatzskala 30 können auch so ausgeführt sein, dass sie eine maschinelle Ablesung bzw. Austragung der jeweiligen Streckenlänge ermöglichen.

Zur leichteren optischen Unterscheidung können die Symbole 14 der Zusatzskala 30 anders ausgeführt sein als die Symbole 13 der zugeordneten Hauptskala 20, welche sich auf derselben Seite 15 bzw. 16 des Masstabkörpers 1 befinden. Die beiden Gruppen von Symbolen 13 und 14 können verschiedenfarbig oder unterschiedlich geformt sein. Aus Platzgründen können die Symbole 14 der Zusatzskala 30 kleiner sein als die Symbole 13 der Hauptskala 20, was eigentlich ebenfalls zur leichteren optischen Unterscheidung zwischen den beiden Gruppen der Symbole 13 und 14 beitragen kann.

Falls die Hauptachse der Symbole 13 der Hauptskala 20 praktisch senkrecht zur Längsrichtung des jeweiligen Klappschenkels 2, 4 oder 22 verläuft, so kann die Hauptachse der Symbole 14 der Zusatzskala 30 ebenfalls praktisch senkrecht zur Längsrichtung des Klappschenkels verlaufen. Hierbei sind die Symbole 14 der Zusatzskala 30 zu den Symbolen 13 der sich auf derselben Seite 16 des Klappschenkels 2, 4 bzw. 22 bzw. des Gliedermasstabes angeordneten Hauptskala 20 jedoch spiegelbildlich. Es ist auch möglich, die Symbole 13 und 14 so auszuführen, dass die Hauptachse derselben praktisch parallel zur Längsachse des Masstabes verläuft. Dann haben die liegenden Symbolgruppen 13 und 14 eine gegenläufige Orientierung, um die Ablesung in der Vorwärtsrichtung von der Zusatzskala 30 zu ermöglichen.

Das zwei aufeinander folgende Klappschenkel 2, 4 bzw. 22 verbindende Gelenk 5 umfasst unter anderem einen Bolzen 40 (Fig. 2 und 3), welcher aus einem kompakten Material, beispielsweise aus Kunststoff, ist. An einem Ende dieses Bolzens 40 ist ein im wesentlichen zylinderförmiger Kopf 41 (Fig. 2) angeformt, dessen Durchmesser grösser ist als der Durchmesser des stiftähnlichen Abschnittes 42 des Bolzens 40. Der Bolzenkopf 41 ist in der äusseren Fläche der Endpartie 3 eines der miteinander gekoppelten Klappschenkel 2 eingelassen. Der Stift 42 geht durch die Endpartien 3 der beiden miteinander verbundenen Klappschenkel 2 und 4 hindurch und seine Stirnfläche ist mit der äusseren Oberfläche 16 des anderen Klappschenkels 4 bündig. In diesem Schenkel 4 ist eine Nut 43 ausgeführt, welche in der Längsrichtung dieses Schenkels 4 verläuft. In dieser Längsnut 43 liegt eine Biegefeder 44, welche durch eine in der Endpartie des Bolzenstiftes 42 vorhandene Bohrung (nicht dargestellt) hindurchgeht.

Der Bolzen 40 ist derart ausgeführt, dass er sich von den Klappschenkeln 2, 4 bzw. 22 optisch abhebt. Dies kann beispielsweise dadurch erreicht werden, dass der Bolzen 40 eine andere Farbe hat als die Klappschenkel. Wenn die Klappschenkel beispielsweise gelb sind, dann kann der Bolzen 40 vorteilhaft rot sein. Ein sich von den Klappschenkeln 2 und 4 optisch abhebender Bolzen 40 ist in Fig. 2 dargestellt, wobei von diesem in Fig. 3 allerdings nur die Stirnfläche des Stiftes 42 desselben sichtbar ist. Der Bolzen 40 kann auch so ausgeführt sein, dass der Kopf 41 und der Stift 42 desselben unterschiedliche Farben oder/und Formen aufweisen, so dass die beiden Enden des Bolzens 40 sich voneinander optisch abheben.

Diese Massnahmen bieten unter anderem den Vorteil, dass die gleich langen Abstände am Gliedermasstab, welche zwischen zwei benachbarten Bolzen 40 liegen, auch aus einer grösseren Entfernung gut sichtbar sind. Diese Massnahme kann auch jenen Personen zugute kommen, welche ein geschwächtes Sehvermögen haben und für welche es vielleicht nur genügt, dass sie im betreffenden Fall eine nur grobe Information über die sie interessierende Strecke erhalten.

Ein Beispiel dafür, wie man mit diesem neuen Gliedermasstab arbeiten kann, lässt sich anhand von Fig. 2 angeben. In Fig. 2 ist nur ein Ausschnitt aus dem Gegenstand 25 gezeigt, weil die Fläche der Oberfläche desselben grösser ist als 30cm mal 30cm. In der Entfernung von 7cm von einer der Kanten 26 des Gegenstandes 25 soll eine Linie 27 parallel zur Gegenstandskante 26 geführt werden. Man schwenkt den End-Klappschenkel 2 vom übrigen Teil des gefalteten Masstabkörpers 1 weg und legt diesen Schenkel 2 mit seiner Aussen- bzw. Unterseite auf die Oberfläche des Gegenstandes 25. Der Schenkel 2 wird derart angelegt, dass die Stirnkante 6 desselben mit der Gegenstandskante 26 fluchtet. Die Hauptskala 20, welche sich auf der Innenseite 16 des End-Klappschenkels 2 befindet, ist gegenläufig und bei der Abmessung der genannten Strecke von 7cm ist sie somit schwierig zu gebrauchen. Da die Innenseite 16 des Klappschenkels 2 jedoch auch mit der Zusatzskala 30 versehen ist, welche von links nach rechts verläuft, kann man die gewünschte Strecke von 7cm mit Hilfe dieser Zusatzskala 30 problemlos festlegen. Danach kann die Linie 27 mit Hilfe weiterer Instrumente gezogen werden.

Da die Zusatzskala 30 sich auch zumindest auf dem anderen End-Klappschenkel 22 befindet, könnte man in gleich einfacher Weise auch dann vorgehen, wenn man diesen zweiten End-Klappschenkel 22 zu diesem Zweck zufälligerweise vom Masstabkörper 1 wegklappen würde. Folglich kommt es nicht darauf an, an welcher Seite des Masstabkörpers 1 sich der oder die im jeweiligen Fall verwendeten Klappschenkel 2 oder 22 und bzw. auch 4 befinden.

In Fig. 4 wird zur Festlegung der genannten Strecke nach Fig. 1 der vorliegende Masstab verwendet. Man schwenkt bei diesem Masstab den End-Klappschenkel 2 sowie den zweitletzten Schenkel 4 vom übrigen Teil des gefalteten Masstabkörpers 1 weg und legt diese Schenkel 2 und 4 mit ihrer Aussenseite flach auf die Oberfläche des Gegenstandes 35. Die Schenkel 2 und 4 werden auf den Gegenstand 35 derart angelegt, dass die Stirnkante 6 des End-Schenkels 2 an der Innenseite der Lasche 37 anschlägt. Die Hauptskala 20, welche sich auf der Innenseite 16 der Klappschenkel 2 und 4 befindet, ist gegenläufig und ihre Symbole "stehen auf dem Kopf", sodass diese Hauptskala 20 zur Abmessung der genannten Strecke von 31cm kaum zu gebrauchen ist. Da die Innenseite 16 der Klappschenkel 2 und 4 jedoch auch mit der Zusatzskala 30 versehen ist, welche von links nach rechts verläuft und deren Symbole aufrechtstehen, kann man die gewünschte Strecke von 31cm mit Hilfe dieser Zusatzskala 30 problemlos festlegen. Danach kann die Nut 38 mit Hilfe eines geeigneten Werkzeuges hergestellt werden.

## Patentansprüche

1. Gliedermasstab, mit hintereinander gekoppelten Klappschenkeln (2,4,22), mit ersten Skalen (20), von welchen je eine sich über je eine Seite der Klappschenkel erstreckt, mit zwei Sätzen (11,12) von Strichen, welche Bestandteile der jeweiligen ersten Skala bzw. der Hauptskala (20) darstellen, welche Zentimeter- und Millimeterstriche aufweisen, wobei die Millimeterstriche kürzer sind als die Zentimeterstriche, und von welchen je einer Strichsatz (11 bzw. 12) einer der Kanten (17 bzw. 18) der betreffenden Seite (16) der Klappschenkel zugeordnet ist, und mit Symbolen (13), welche einen weiteren Bestandteil der jeweiligen ersten Skala (20) darstellen, welche zwischen je zwei einander gegenüberliegenden Zentimeterstrichen der genannten Teilungen (11,12) angeordnet sind und welche eine in einer Richtung des Masstabkörpers aufsteigende Reihe bilden, dass eine zweite Skala (30) vorgesehen ist, welche sich über mehr als einen Klappschenkel erstreckt und welche auf der Innenseite der Klappschenkel (2,4,22) ausgeführt ist, dass diese zweite Skala Symbole (14 bzw. 24) umfasst, welche eine Reihe bilden, dass diese Symbolenreihe (14 bzw.24) zur Reihe der Symbole (13) der Hauptskala (20) gegenläufig ist, dass die Symbole (14 bzw. 24) der Hilfsskala (30) zu den Symbolen (13) der Hauptskala (20) spiegelbildlich angeordnet sind, dass die Symbole (14 bzw. 24) der zweiten Skala (30) sich zwischen einem der Sätze (11 bzw. 12) der Teilungsstriche und den Symbolen (13) der ersten Skala (20) befinden und dass die Symbole der zweiten Skala (30) jenem Abschnitt der Zentimeterstriche seitlich zugeordnet sind, welcher die Millimeterstriche überragt.

2. Gliedermasstab nach Anspruch 1, dadurch gekennzeichnet, dass die Skalen (20;30) so ausgeführt sind, dass die Fusspartien der spiegelbildlich angeordneten Symbole einander zugewandt sind.

3. Gliedermasstab nach Anspruch 1, dadurch gekennzeichnet, dass die Skalen (20;30) so ausgeführt sind, dass die Kopfpartien der spiegelbildlich angeordneten Symbole einander zugewandt sind.

4. Gliedermasstab nach Anspruch 1, dadurch gekennzeichnet, dass die Hilfsskala (30) so ausgeführt ist, dass sie zwei Sätze von Symbolen (14,24) aufweist, welche zu den Symbolen (13) der Hauptskala (20) spiegelbildlich angeordnet sind, dass beim ersten Satz der Symbole der Hilfsskala die Fusspartien derselben den Kopfpartien des Symbole der Hauptskala zugeordnet sind und dass die Symbole der zweiten Hilfsskala so ausgeführt sind, dass die Kopfpartien der Symbole dieser Hilfsskala den Köpfen der Symbole des ersten Satzes einander zugewandt sind.

5. Gliedermasstab nach Anspruch 1, dadurch gekennzeichnet, dass die Symbole (14) der zweiten Skala (30) derart ausgeführt sind, dass sie sich von den Symbolen (31) der ersten Skala (10 bzw. 20) optisch abheben, und dass die Symbole (14) der zweiten Skala (30) eine andere Farbe oder eine andere Form aufweisen können als die Symbole (1) der ersten Skala (10 bzw. 20).

6. Gliedermasstab nach Anspruch 1, dadurch gekennzeichnet, dass die Hauptachsen der Symbole der ersten Skala (20) und der zweiten Skala (30) praktisch rechtwinklig zur Längsachse des Klappschenkels stehen.

7. Gliedermasstab nach Anspruch 1, dadurch gekennzeichnet, dass die Hauptachsen der Symbole der ersten Skala (20) und der zweiten Skala (30) praktisch parallel zur Längsachse des Klappschenkels verlaufen und dass die liegenden Symbole der Skalen (20;30) eine gegenläufige Orientierung aufweisen.

8. Gliedermasstab nach Anspruch 1, dadurch gekennzeichnet, dass der überragende Abschnitt des Zentimeterstriches sich zwischen zwei benachbarten Stellen eines Symbols der zweiten Skala (30) wenigstens teilweise befindet, wenn das Symbol zumindest zweistellig ist, und dass der überragende Abschnitt des Zentimeterstriches sich neben dem betreffenden Symbol der zweiten Skala (30) wenigstens teilweise befindet, wenn das Symbol einstellig ist.

9. Gliedermasstab nach Anspruch 1, bei dem die Klappschenkel mit Hilfe von Gelenken miteinander verbunden sind, dadurch gekennzeichnet, dass das jeweilige Gelenk (5) einen Bolzen (40) aufweist, welcher die miteinander verbundenen Klappschenkel durchsetzt und zumindest an einer der Seiten (15 bzw. 16) des Masstabkörpers (1) zum Vorschein kommt, und dass der Bolzen (40) derart ausgeführt ist, dass er sich von den Klappschenkeln (2;4 bzw. 22) optisch abhebt.

10. Gliedermasstab nach Anspruch 9, dadurch gekennzeichnet, dass der Bolzen (40) einen Kopf (41) aufweist, welcher in der äusseren Seite eines der Klappschenkel eingelassen ist, dass die Endpartie des stiftähnlichen Abschnittes (42) des Bolzens (40) sich im Bereich der Aussenseite des anderen der miteinander verbundenen Klappschenkel befindet, dass in diesem Klappschenkel eine Nut (43) ausgeführt ist, welche in der Längsrichtung dieses Schenkels verläuft und dass in dieser Nut (43) eine Biegefeder (44) liegt, welche durch eine in dieser Endpartie des Bolzenstiftes (42) ausgeführte Oeffnung hindurchgeht.

## Claims

1. Folding rule having folding legs (2, 4, 22) which are coupled one behind the other, having first scales (20), of which in each case one extends over in each case one side of the folding legs, having two sets (11, 12) of strokes which represents constituent parts of the respective first scale or main scale (20), which exhibit centimetre strokes and millimetre strokes, the millimetre strokes being shorter than the centimetre strokes, and of which in each case one stroke set (11 or 12) is assigned to one of the edges (17 or 18, respectively) of the relevant side (16) of the folding legs, and having symbols (13) which represent a further constituent part of the respective first scale (20), which are arranged between in each case two mutually opposite centimetre strokes of the cited divisions (11, 12) and which form a series increasing in one direction of the rule body, and in the case of which there is provided a second scale (30) which extends over more than one folding leg and is formed on the inner side of the folding leg (2, 4, 22), in the case of which said second scale comprises symbols (14 and 24) which form a series, in the case of which said symbol series (14 and 24) runs in the opposite direction from the series of the symbols (13) of the main scale (20), in the case of which the symbols (14 and 24) of the auxiliary scale (30) are arranged mirror-invertedly with respect to the symbols (13) of the main scale (20), in the case of which the symbols (14 and 24) of the second scale (30) are located between one of the sets (11 and 12) of the division strokes and the symbols (13) of the first scale (20), and in the case of which the symbols of the second scale (30) are laterally assigned to that portion of the centimetre strokes which project above the millimetre stroke.

2. Folding rule according to Claim 1, characterized in that the scales (20; 30) are formed such that the foot parts of the symbols, arranged mirror-invertedly, are directed towards one another.

3. Folding rule according to Claim 1, characterized in that the scales (20; 30) are formed such that the head parts of the symbols, arranged mirror-invertedly, are directed towards one another.

4. Folding rule according to Claim 1, characterized in that the auxiliary scale (30) is formed such that it exhibits two sets of symbols (14, 24) which are arranged mirror-invertedly with respect to the symbols (13) of the main scale (20), in that, in the case of the first set of symbols of the auxiliary scale, the foot parts of the same are directed towards the foot parts of the symbols of the main scale, and in that the symbols of the second auxiliary scale are formed such that the head parts of the symbols of said auxiliary scale are directed towards the heads of the symbols of the first set.

5. Folding rule according to Claim 1, characterized in that the symbols (14) of the second scale (30) are formed such that they stand out visually from the symbols (13) of the first scale (10 and 20), and in that the symbols (14) of the second scale (30) may be of a different colour or a different shape from the symbols (1) of the first scale (10 and 20).

6. Folding rule according to Claim 1, characterized in that the main axes of the symbols of the first scale (20) and of the second scale (30) are located virtually at right angles with respect to the longitudinal axis of the folding leg.

7. Folding rule according to Claim 1, characterized in that the main axes of the symbols of the first scale (20) and of the second scale (30) run virtually parallel to the longitudinal axis of the folding leg, and in that the horizontal symbols of the scales (20; 30) are reoriented in opposite directions.

8. Folding rule according to Claim 1, characterized in that the projecting portion of the centimetre stroke is at least partially located between two neighbouring digits of a symbol of the second scale (30) if the symbol has at least two digits, and in that the projecting portion of the centimetre stroke is at least partially located beside the relevant symbol of the second scale (30) if the symbol has one digit.

9. Folding rule according to Claim 1, in which the folding legs are connected to one another with the aid of articulations, characterized in that the respective articulation (5) exhibits a bolt (40) which passes through the interconnected folding legs and is visible at least on one of the sides (15 and 16) of the rule body (1), and in that the bolt (40) is configured such that it stands out visually from the folding legs (2; 4 and 22).

10. Folding rule according to Claim 9, characterized in that the bolt (40) exhibits a head (41) which is let into the outer side of one of the folding legs, in that the end part of the pin-like portion (42) of the bolt (40) is located in the region of the outer side of the other of the interconnected folding legs, in that there is configured, in said folding leg, a groove (43) which runs in the longitudinal direction of this leg, and in that there is located, in said groove (43), a spiral spring (44) which passes through an opening formed in said end part of the bolt pin (42).

## Revendications

1. Mètre pliant, avec des branches pliantes couplées les unes derrière les autres (2,4,22) avec des premières graduations (20), dont chacune s'étend sur chaque face respective de la branche pliante, avec deux lignes (11,12) de traits, qui constituent les éléments de chaque première graduation ou de la graduation principale (20), qui présentent des traits pour les centimètres et pour les millimètres, les traits des millimètres étant plus courts que les traits des centimètres, et dont chacune est affectée d'une ligne de traits (11 ou 12) sur l'un des bords (17 ou 18) de la face concernée (16) de la branche pliante, et avec des symboles (13), qui constituent un autre élement de chaque première graduation (20), qui sont disposés entre deux traits de centimètres opposés des divisions mentionnées (11,12) et qui forment une série croissante dans un sens du corps du mètre, dans lequel une deuxième graduation (30) est prévue, qui s'étend sur plus d'une branche pliante et qui est réalisée sur la face interne de la branche pliante (2,4,22), cette deuxième graduation comprenant des symboles (14 ou 24) qui forment une série, cette série de symboles (14 ou 24) étant inverse par rapport à la série des symboles (13) de la graduation principale (20), les symboles (14 ou 24) de la graduation secondaire (30) étant disposés de manière symétrique par rapport aux symboles (13) de la graduation principale (20), les symboles (14 ou 24) de la seconde graduation (30) se trouvant entre l'une des lignes (11 ou 12) de traits de division et les symboles (13) de la première graduation (20) et les symboles de la seconde graduation (30) étant disposés de part et d'autre de chaque segment des traits de centimètres, qui dépasse les traits de millimètres.

2. Mètre pliant selon la revendication 1, caractérisé en ce que les graduations (20;30) sont réalisées de telle sorte que les parties de base des symboles disposés symétriquement sont tournées les unes vers les autres.

3. Mètre pliant selon la revendication 1, caractérisé en ce que les graduations (20;30) sont réalisées de telle sorte que les parties de tête des symboles disposés symétriquement sont tournées les unes vers les autres.

4. Mètre pliant selon la revendication 1, caractérisé en ce que la graduation secondaire (30) est réalisée de telle sorte qu'elle présente deux lignes de symboles (14,24) qui sont disposés symétriquement par rapport aux symboles (13) de la graduation principale (20), en ce que dans la première ligne de symboles de la graduation secondaire (30) les parties de base de ceux-ci sont associées aux parties de tête des symboles de la graduation principale, et en ce que les symboles de la seconde graduation secondaire sont réalisés de telle sorte que les parties de tête des symboles de cette graduation secondaire soient tournées vers les têtes des symboles de la première ligne.

5. Mètre pliant selon la revendication 1, caractérisé en ce que les symboles (14) de la seconde graduation (30) sont réalisés de telle sorte qu'ils se distinguent optiquement des symboles (13) de la première graduation (10 ou 20) et en ce que les symboles (14) de la seconde graduation (30) peuvent avoir une autre couleur ou une autre forme que les symboles (13) de la première graduation (10 ou 20).

6. Mètre pliant selon la revendication 1, caractérisé en ce que les axes principaux des symboles de la première graduation (20) et de la seconde graduation (30) sont en pratique perpendiculaires à l'axe longitudinal de la branche pliante.

7. Mètre pliant selon la revendication 1, caractérisé en ce que les axes principaux des symboles de la première graduation (20) et de la seconde graduation (30) s'étendent en pratique parallèlement à l'axe longitudinal de la branche pliante, et en ce que les symboles des graduations (20;30) présentent une orientation inversée.

8. Mètre pliant selon la revendication 1, caractérisé en ce que le segment dépassant du trait des centimètres se trouve au moins en partie entre deux chiffres voisins d'un symbole de la seconde graduation (30), lorsque le symbole a au moins deux chiffres, et en ce que le segment dépassant du trait des centimètres se trouve au moins partiellement à proximité du symbole en question de la seconde graduation (30) lorsque ce symbole ne comporte qu'un chiffre.

9. Mètre pliant selon la revendication 1, dans lequel les branches pliantes sont reliées entre elles à l'aide d'articulations, caractérisé en ce que chaque articulation (5) présente une tige (40), qui traverse les branches pliantes reliées entre elles et qui est visible au moins sur une des faces (15 ou 16) du corps du mètre (1), et en ce que la tige (40) est réalisée de telle sorte qu'elle se distingue optiquement des branches pliantes (2;4 ou 22).

10. Mètre pliant selon la revendication 9, caractérisé en ce que la tige (40) présente une tête (41), qui est introduite dans la face externe de l'une des branches pliantes, en ce que la partie extrême du segment de type goupille (42) de la tige (40) se trouve dans le domaine de la face externe de l'autre des branches pliantes reliées entre elles, en ce qu'une rainure (43) est réalisée dans le sens longitudinal dans cette branche pliante, et en ce qu'un ressort spiral (44) se trouve dans cette rainure (43), qui passe par une ouverture réalisée dans cette partie extrême de la goupille (42) de la tige.
